# EUROPEAN PATENT APPLICATION

(11) **EP 4 332 652 A1**
(43) Date of publication of application: **06.03.2024**
(21) Application number: 21938702.4
(22) Date of filing: 08.06.2021
(51) Int. Cl.: G02B 6/42, G02B 6/38

(54) **ACTIVE OPTICAL CABLE ASSEMBLY AND ASSEMBLING METHOD THEREOF**

(30) Priority: 29.04.2021 CN 202110471590
(71) Applicant: Accelink Technologies Co., Ltd., HongShan District Wuhan Hubei 430074 (CN)
(72) Inventor: SONG, Beili, Wuhan, Hubei 430074 (CN); ZHOU, Yun, Wuhan, Hubei 430074 (CN); SHENG, Yubang, Wuhan, Hubei 430074 (CN); QUAN, Benqing, Wuhan, Hubei 430074 (CN); SONG, Mengyang, Wuhan, Hubei 430074 (CN); SUN, Hongjun, Wuhan, Hubei 430074 (CN)
(74) Representative: Patentgruppen A/S
(86) International application number: PCT/CN2021/098889
(87) International publication number: WO 2022/227233

(57) **Abstract**

Disclosed are an active optical cable assembly and assembling method thereof. The assembly comprises an optical fiber connector, optical port adapter, and optical transceiver sequentially connected, the latter two being pluggably connected; wherein the optical fiber connector comprises a movable kit, and a tail sleeve, an intermediate connection sleeve, and a plug connector sequentially connected; the movable kit is sleeved on the outer side of the plug connector for preventing the plug connector from detaching from the optical port adapter after inserted into the optical port adapter; a blocking member is disposed between the tail sleeve and the movable kit, and prevents the movable kit from sliding backwards. When the blocking member is removed and the movable kit is slid backwards to the intermediate connection sleeve, the plug connector is pullable out from the optical port adapter. In the structure, the optical fiber connector is connected to the optical transceiver in a pluggable manner, so that the optical transceiver is not connected to the optical cable during assembly, and the problem of optical cable scrapping caused by inconvenient assembly of the optical transceiver can be solved.

## Description

### CROSS-REFERENCE TO RELATED APPLICATIONS

The present disclosure claims a benefit of, and priority to Chinese Patent Application Serial No. 202110471590.6 filed on April 29, 2021, the disclosure of which is hereby expressly incorporated by reference herein in its entirety.

### TECHNICAL FIELD

The disclosure relates to the field of optical communication technology, and more specifically, relates to an active optical cable assembly and assembling method thereof.

### BACKGROUND

Active optical cables are composed of multimode optical fibers, optical transceiver devices, control chips, and parallel optical modules. The optical transceivers at both ends of the active optical cable provide functions of photoelectric conversion and optical transmission to improve the transmission speed and distance of the cable without weakening compatibility with standard electrical interfaces. Therefore, they are increasingly widely used in the field of optical communication.

The optical transceiver in active optical cables comprises components such as a shell, an optical fiber, and a circuit board. The optical fiber is located at an end of the optical cable and is connected to the optical components on the circuit board. Active optical cables of related technologies require the optical fiber and circuit board connected to the optical cable to be installed together in the shell during assembly of the optical transceiver. That is, the optical fiber needs to be fixed and installed inside the optical transceiver, and cannot be assembled with the optical transceiver in a pluggable manner. Due to that the optical cable is thick and long, the entire assembly process is very inconvenient and the optical fiber will be damaged in case of any carelessness, resulting in the entire optical cable to be scrapped.

### SUMMARY

In response to the above defects or improvement requirements regarding the existing technology, this disclosure provides an active optical cable assembly and its assembly method, aiming to achieve a pluggable connection between the optical fiber connector and the optical transceiver, thereby achieving the function of not connecting the optical cable during the assembly of the optical transceiver, and solving the problem of optical cable scrapping caused by inconvenient assembly of the optical transceiver.

In order to achieve the above purpose, in the first aspect, the present disclosure provides an active optical cable assembly, comprising an optical fiber connector, an optical port adapter, and an optical transceiver which are arranged in sequence, wherein the optical port adapter is fixedly installed at an end of the optical transceiver, and the optical fiber connector is in a pluggable connection with the optical port adapter;
the optical fiber connector comprises a movable kit, a tail sleeve, an intermediate connection sleeve and a plug connector, the tail sleeve, the intermediate connection sleeve and the plug connector being arranged in sequence, wherein the movable kit is sleeved on an outer side of the plug connector, for preventing the plug connector from detaching from the optical port adapter after the plug connector is inserted into the optical port adapter;
a blocking member is provided between the tail sleeve and the movable kit to prevent the movable kit from sliding backwards; and when the blocking member is removed and the movable kit is caused to slide backwards to the intermediate connection sleeve, the plug connector can be pulled out from the optical port adapter.

In some implementations, an inner side of the optical port adapter is provided with elastic claws, and an outer side of a front end of the plug connector is provided with corresponding buckle slots;
when the front end of the plug connector is inserted into the optical port adapter, the elastic claw is coupled to the buckle slot, and a side wall of a front end of the movable kit is squeezed onto an outside of the elastic claw to prevent the elastic claw from stretching out and detaching from the buckle slot.

In some implementations, the blocking member specifically adopts an optical cable clamp ring, and an outer side of the intermediate connection sleeve is provided with a recession groove;
when the optical cable clamp ring is sleeved on the recession groove, the movable kit can be prevented from sliding backwards; when the optical cable clamp ring is removed and the movable kit is caused to slide backwards to the recession groove, the plug connector can be pulled out from the optical port adapter.

In some implementations, the optical cable clamp ring is a closed ring structure, comprising a first half ring and a second half ring, which are assembled to form a first ring core, for accommodating the intermediate connection sleeve of the optical fiber connector, and are connected in a buckle manner;
wherein the first half ring comprises a first crossbeam and a first and a second side arms which are located at each of two ends of the first crossbeam, respectively; the second half ring comprises a second crossbeam and a third and a fourth side arms which are located at each of two ends of the second crossbeam, respectively.

In some implementations, an outer side of the first side arm is provided with a first protrusion and a first recess, and an outer side of the second side arm is provided with a second protrusion and a second recess;
the third side arm is provided with a first clamp hook thereon, and the fourth side arm is provided with a second clamp hook thereon;
when assembling, the first clamp hook and the second clamp hook on the second half ring are squeezed into the first recess and the second recess on the first half ring, respectively, and are buckled with the first protrusion and the second protrusion on the first half ring.

In some implementations, the optical cable clamp ring is a closed ring structure, comprising a third half ring and a fourth half ring, which are assembled to form a second ring core for accommodating the intermediate connection sleeve of the optical fiber connector, and are connected in a pivot manner and a buckle manner;
wherein the third half ring comprises a third crossbeam and a fifth and sixth side arms which are located at each of two ends of the third crossbeam respectively; the fourth half ring comprises a fourth crossbeam and a seventh and eighth side arms located at each of two ends of the fourth crossbeam, respectively.

In some implementations, the fifth side arm is provided with a hinge hole, and an inner side of the hinge hole is provided with an opening; the seventh side arm is provided with a hinge shaft; wherein the hinge shaft is squeezed into the hinge hole from the opening, so that the hinge shaft is concentric with the hinge hole, and the hinge shaft is rotate freely in the hinge hole;
an outer side of the sixth side arm is provided with a third protrusion and a third recess, and the eighth side arm is provided with a third clamp hook;
when assembling, the hinge shaft on the fourth half ring rotates within the hinge hole on the third half ring, and the third clamp hook on the fourth half ring squeezes into the third recess on the third half ring and engages with the third protrusion on the third half ring.

In some implementations, the optical cable clamp ring is an open ring structure, comprising a fifth crossbeam and a ninth and tenth side arms which are located at each of two ends of the fifth crossbeam;
an end of the ninth side arm is provided with a first clamp hook, and an end of the tenth side arm is provided with a second clamp hook, an installation port being provided between the first clamp hook and the second clamp hook;
wherein a middle of the optical cable clamp ring forms a third ring core, for accommodating the intermediate connection sleeve of the optical fiber connector.

In some implementations, the intermediate connection sleeve is rotatable around the tail sleeve, and when the intermediate connection sleeve rotates at a preset angle, a blocking member that is preventable the movable kit from sliding backwards is formed; when the intermediate connection sleeve is in its initial position, the movable kit is slidable backwards to pull out the plug connector from the optical port adapter.

In the second aspect, the present disclosure further provides an assembling method of an active optical cable assembly, which is used for assembling the active optical cable assembly described in the first aspect, the assembling method comprising:
inserting the plug connector at a front end of the optical fiber connector into the optical port adapter, and using the movable kit to achieve fastening between the plug connector and the optical port adapter;
installing a blocking member between the tail sleeve and the movable kit on the optical fiber connector to prevent the movable kit from sliding backwards.

Overall, the above technical solution proposed in this disclosure has the following beneficial effects compared to existing technologies: in the active optical cable assembly provided in this disclosure, when the optical fiber connector is inserted into the optical port adapter, the movable kit can be used to achieve fastening between the plug connector and the optical port adapter, and then a blocking member can be installed between the tail sleeve and the movable kit, which can prevent the movable kit from sliding backwards, whereby the movable kit can always play its fastening role to prevent the connector from detaching from the optical adapter. With the above structure, a pluggable connection can be achieved between the optical fiber connector and the optical transceiver, thereby achieving the function of not connecting the optical cable during the assembly of the optical transceiver, and solving the problem of cable scrapping caused by inconvenient assembly of the optical transceiver.

### BRIEF DESCRIPTION OF THE DRAWINGS

Figure 1 is a schematic diagram of an assembly structure of an active optical cable assembly when using a first optical cable clamp ring according to an embodiment of the present disclosure;
Figure 2 is a schematic diagram of an explosive structure of an active optical cable assembly when using a first optical cable clamp ring according to an embodiment of the present disclosure;
Figure 3 is a main view and a cross-sectional view along an A direction of matching of a first optical cable clamp ring and an optical fiber connector according to an embodiment of the present disclosure;
Figure 4 is a partial cross-sectional view along a B 1 direction in Figure 1 when using an optical cable clamp ring and the optical fiber connector is in an inserted state according to an embodiment of the present disclosure;
Figure 5 is a partial cross-sectional view along a B 1 direction in Figure 1 when using an optical cable clamp ring and the optical fiber connector being in an unplugged state according to an embodiment of the present disclosure;
Figure 6 is a structural schematic diagram of a first optical cable clamp ring in a working state according to an embodiment of the present disclosure;
Figure 7 is a structural schematic diagram I of a first half ring of a first optical cable clamp ring according to an embodiment of the present disclosure;
Figure 8 is a structural schematic diagram II of a first half ring of a first optical cable clamp ring according to an embodiment of the present disclosure;
Figure 9 is a structural schematic diagram I of a second half ring of a first optical cable clamp ring according to an embodiment of the present disclosure;
Figure 10 is a structural schematic diagram II of a second half ring of a first optical cable clamp ring according to an embodiment of the present disclosure;
Figure 11 is a structural schematic diagram of an active optical cable during an assembly process when using a second optical cable clamp ring according to an embodiment of the present disclosure;
Figure 12 is a schematic diagram of an assembly structure of an active optical cable assembly when using a second optical cable clamp ring according to an embodiment of the present disclosure;
Figure 13 is a structural schematic diagram of a second optical cable clamp ring in a working state according to an embodiment of the present disclosure;
Figure 14 is a schematic diagram of a structure of a second optical cable clamp ring before assembly according to an embodiment of the present disclosure;
Figure 15 is a structural schematic diagram of a second optical cable clamp ring in a non working state after assembly according to an embodiment of the present disclosure;
Figure 16 is a structural schematic diagram of an active optical cable assembly process when using a third optical cable clamp ring according to an embodiment of the present disclosure;
Figure 17 is a schematic diagram of an assembly structure of an active optical cable assembly when using a third optical cable clamp ring according to an embodiment of the present disclosure;
Figure 18 is a structural schematic diagram of a third optical cable clamp ring provided in an embodiment of the present disclosure;
Figure 19 is a cross-sectional view of matching of a fourth optical cable clamp ring and an optical fiber connector according to an embodiment of the present disclosure;
Figure 20 is an assembly flow diagram of an active optical cable assembly when using an optical cable clamp ring according to an embodiment of the present disclosure;
Figure 21 is a structural schematic diagram of an active optical cable assembly when an optical cable clamp ring is not used according to an embodiment of the present disclosure;
Figure 22 is a partial cross-sectional view along a B2 direction in Figure 22 when an optical cable clamp ring is not used and an optical fiber connector is in an inserted state according to an embodiment of the present disclosure;
Figure 23 is a partial cross-sectional view along a B2 direction in Figure 22 when an optical fiber clamp ring is not used and an optical fiber connector is in an unplugged state, according to an embodiment of the present disclosure;
Figure 24 is a partial cross-sectional view at a limit groove of an optical fiber connector along an A1 direction in Figure 23 and an A2 direction in Figure 24 according to an embodiment of the present disclosure;
Figure 25 is an assembly flow diagram of an active optical cable assembly when an optical cable clamp ring is not used according to an embodiment of the present disclosure.

### DETAILED DESCRIPTION

In order to make the purpose, technical solutions, and advantages of this disclosure clearer and easier to understand, a further detailed explanation of this disclosure in conjunction with the accompanying drawings and embodiments is listed as follows. It should be understood that the specific embodiments described here are only used to explain this disclosure and are not intended to limit it. In addition, the technical features involved in the various embodiments of the present disclosure described below can be combined with each other as long as they do not conflict with each other.

In the description of the embodiments of the present disclosure, the terms "inside", "outside", "vertical", "horizontal", "up", "down", "top", "bottom", "left", "right", "front", "back", etc. indicate the orientations or position relationships based on the orientations or position relationships shown in the accompanying drawings. The purpose is to only facilitate the description of the embodiments of the present disclosure and not to require the embodiments of the present disclosure to be constructed and operated in a specific orientation. Therefore, it should not be understood as a limitation on the embodiments of the present disclosure.

### Embodiment 1

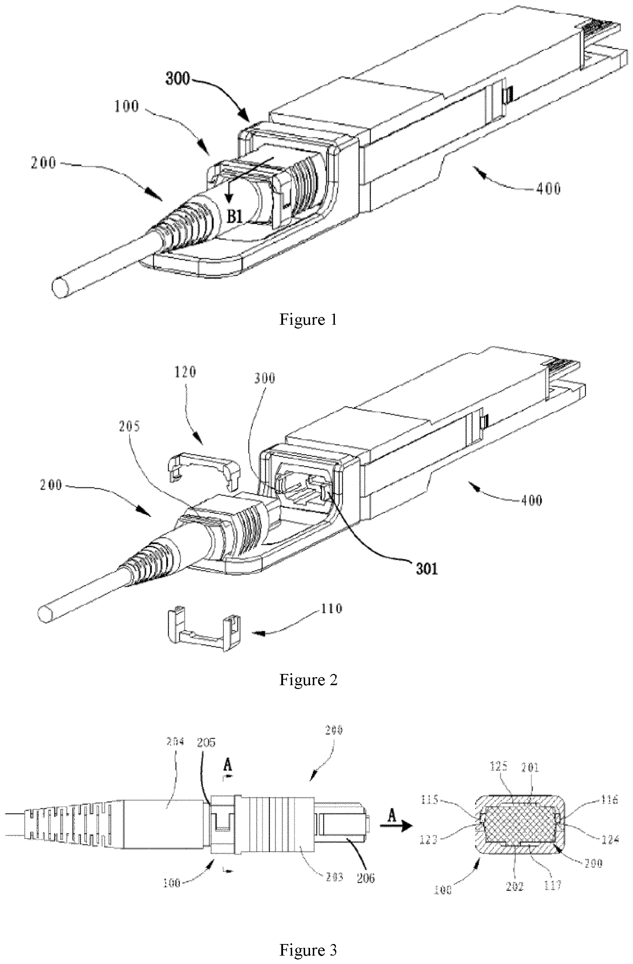

In order to achieve a pluggable connection between optical fiber connectors and optical transceivers, and solve the problem of optical cable scrapping caused by inconvenient assembly of optical transceivers, an embodiment of the present disclosure provides an active optical cable assembly, as shown in Figures 1 to 5, mainly comprising a first optical cable clamp ring 100, and an optical fiber connector 200, an optical port adapter 300, and an optical transceiver 400 which are sequentially connected; wherein the optical port adapter 300 is fixedly installed at an end of the optical transceiver 400, and the optical fiber connector 200 is in a pluggable connection with the optical port adapter 300.

It should be noted that the embodiments of this disclosure are described in a manner that an end close to the optical fiber connector 200 is considered as a rear end and an end close to the optical transceiver 400 is considered as a front end, but it is not necessary to limit this disclosure.

Referring to Figure 3, the optical fiber connector 200 comprises a movable kit 203, and a tail sleeve 204, an intermediate connection sleeve 205, and a plug connector 206 that are sequentially connected from rear to front. A front end of the plug connector 206 is used for coupling with the optical port adapter 300, and a rear end thereof is connected to the intermediate connection sleeve 205; the movable kit 203 is sleeved on the outer side of the plug connector 206, for preventing the plug connector from detaching from the optical port adapter 300 after the plug connector 206 is inserted into the optical port adapter 300, thereby achieving fastening between the optical fiber connector 200 and the optical port adapter 300, and the movable kit 203 is slidable forward and backward along the plug connector 206.

Referring to Figures 1 to 4, an outer side of the intermediate connection sleeve 205 is provided with a recession groove, and the recession groove is connected to the rear end of the plug connector 206. The first optical cable clamp ring 100 is sleeved on the recession groove to prevent the movable kit 203 from sliding backwards. When the optical cable clamp ring is removed and the movable kit 203 is caused to slide backwards to the recession groove, the fastening effect of the movable kit 203 fails, and thus the plug connector 206 can be pulled out from the optical port adapter 300.

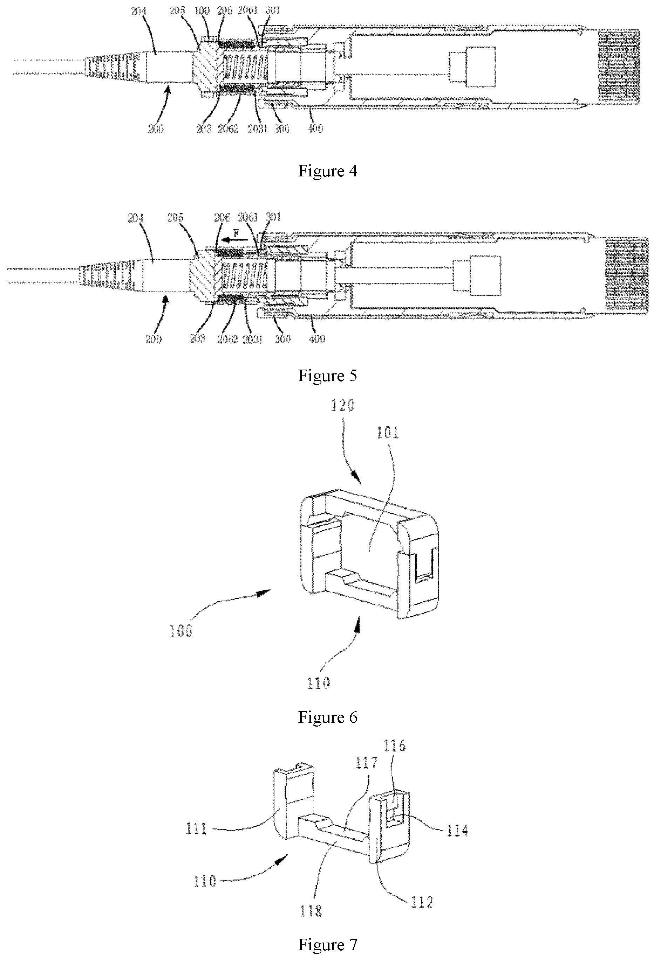

The following is a specific introduction to the insertion and extraction structure of the active optical cable assembly, which is described in combination with the accompanying drawings:
Referring to Figures 4 and 5, an inner side of the optical port adapter 300 is provided with an elastic claw 301 that extends outward, and an outer side of the front end of the plug connector 206 is provided with a corresponding buckle slot 2061. An outer side of the plug connector 206 is also provided with a spring groove positioned in buckle slot 2061, and the spring groove is provided with a spring 2062 therein; an inner side of the movable kit 203 is provided with a protrusion 2031, and a front end of the spring 2062 is in contact with a rear end of the protrusion 2031. The intermediate connection sleeve 205 is also provided with a first guide pin 201 and a second guide pin 202 which are located at the rear end of the recession groove, as shown in Figure 3, for limiting a position of the movable kit 203 when it slides backwards to the recession groove; that is, the movable kit 203 can slide backwards to where at most the first guide pin 201 and the second guide pin 202 are positioned.

Referring to Figure 4, when the front end of the plug connector 206 is inserted into the optical port adapter 300, the elastic claw 301 on the inner side of the optical port adapter 300 is exactly coupled to the clamp slot 2061 on the outer side of the plug connector 206. At this time, the spring 2062 is in a natural state, and a side wall of the front end of the movable sleeve 203 is squeezed onto an outer side of the elastic claw 301, which can prevent the elastic claw 301 from stretching out and detaching from the slot 2061, thereby achieving fastening the optical fiber connector 200 and the optical port adapter 300. At this time, the first optical cable clamp ring 100 is installed on the recession groove between the movable kit 203 and the tail sleeve 204 on the optical fiber connector 200, which can effectively prevent the movable kit 203 from sliding backwards, so that the front end of the movable kit 203 is always surrounding the outer side of the elastic claw 301 of the plug connector 206. As a result, the elastic claw 301 is effectively prevented from stretching out and separating from the clamp groove 2061.

Referring to Figure 5, when the optical fiber connector 200 needs to be pulled out from the optical port adapter 300, the first optical cable clamp ring 100 needs to be removed from the recession groove, and then the movable kit 203 needs to be caused to slide backward; that is, an external force F as shown in Figure 5 is applied to the movable kit 203. The spring 2062 is compressed under the action of the protrusion 2031, and the movable kit 203 slides to the recession groove of the intermediate connection sleeve 205, such that the side wall of the front end of the movable kit 203 is gradually detached from the elastic claw 301, and at this time, the plug connector 206 of the optical fiber connector 200 can be pulled out from the optical port adapter 300.

The following will continue to provide a specific introduction to the structure of the first optical cable clamp ring 100 in conjunction with the accompanying drawings:
As shown in Figure 6, the first optical cable clamp ring 100 is a closed ring structure, comprising a first half ring 110 and a second half ring 120. The first half ring 110 and the second half ring 120 are assembled to form a first ring core 101, for accommodating the intermediate connection sleeve 205 of the optical fiber connector 200. A first end of the first half ring 110 (i.e. the left end in the figure) and A first end of the second half ring 120 are connected through a buckle, and A second end of the first half ring 110 (i.e. the right end in the figure) and A second end of the second half ring 120 are connected through a buckle.

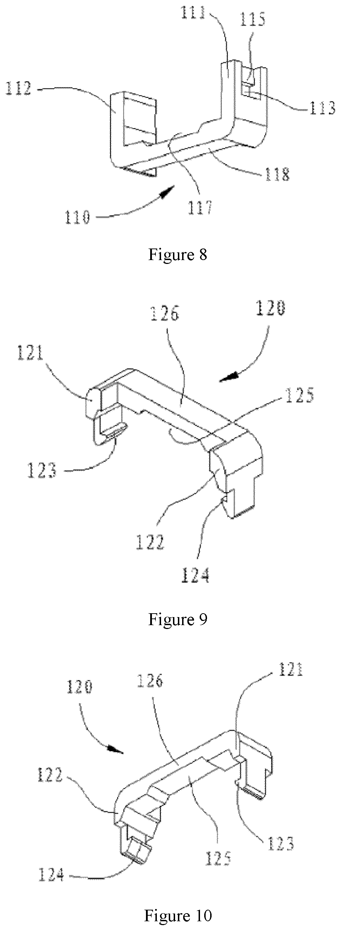

Continuing referring to Figures 7 and 8, the first half ring 110 comprises a first crossbeam 118 located in the middle, as well as a first side arm 111 and a second side arm 112 which are located at each of two ends of the first crossbeam 118, respectively. An inner side of the first crossbeam 118 is provided with a first recession groove 117, which is used to make way for the first guide pin 201 or the second guide pin 202 on the optical fiber connector 200. An outer side of the first side arm 111 is provided with a first protrusion 115 and a first recess 113, and an outer side of the second side arm 112 is provided with a second protrusion 116 and a second recess 114.

Continuing referring to Figures 9 and 10, the second half ring 120 comprises a second crossbeam 126 located in the middle, as well as a third side arm 121 and a fourth side arm 122 which are located at each of two ends of the second crossbeam 126, respectively. An inner side of the second crossbeam 126 is provided with a second recession groove 125 for making way for the first guide pin 201 or the second guide pin 202 on the optical fiber connector 200. The third side arm 121 is provided with a first clamp hook 123, and the fourth side arm 122 is provided with a second clamp hook 124.

When the first optical cable clamp ring 100 needs to be assembled, the first clamp hook 123 and the second clamp hook 124 on the second half ring 120 are squeezed into the first recess 113 and the second recess 114 in the first half ring 110, respectively, and are buckled with the first protrusion 115 and the second protrusion 116 on the first half ring 110, as shown in Figure 3. In this way, the first half ring 110 and the second half ring 120 can be assembled through a buckle connection method and sleeved on the optical fiber connector 200.

In the above mentioned active optical cable assembly provided in the embodiment of this disclosure, after the optical fiber connector is inserted into the optical port adapter, the movable kit can be used to achieve the fastening between the plug connector and the optical port adapter. Then, the first optical cable clamp ring can be sleeved on the recession groove of the optical fiber connector to prevent the movable kit from sliding backwards, and thus the movable kit can always play its fastening role to prevent the plug connector from detaching from the optical port adapter. By means of the above structure, a pluggable connection can be achieved between the optical fiber connector and the optical transceiver, achieving the function of not connecting the optical cable during the assembly of the optical transceiver, and solving the problem of cable scrapping caused by inconvenient assembly of the optical transceiver.

### Embodiment 2

In order to achieve a pluggable connection between the optical fiber connector and the optical transceiver, and to solve the problem of optical cable scrapping caused by inconvenient assembly of optical transceivers, an embodiment of the present disclosure also provides another active optical cable assembly, which differs from Embodiment 1 in that the structures of the optical cable clamp ring used are different.

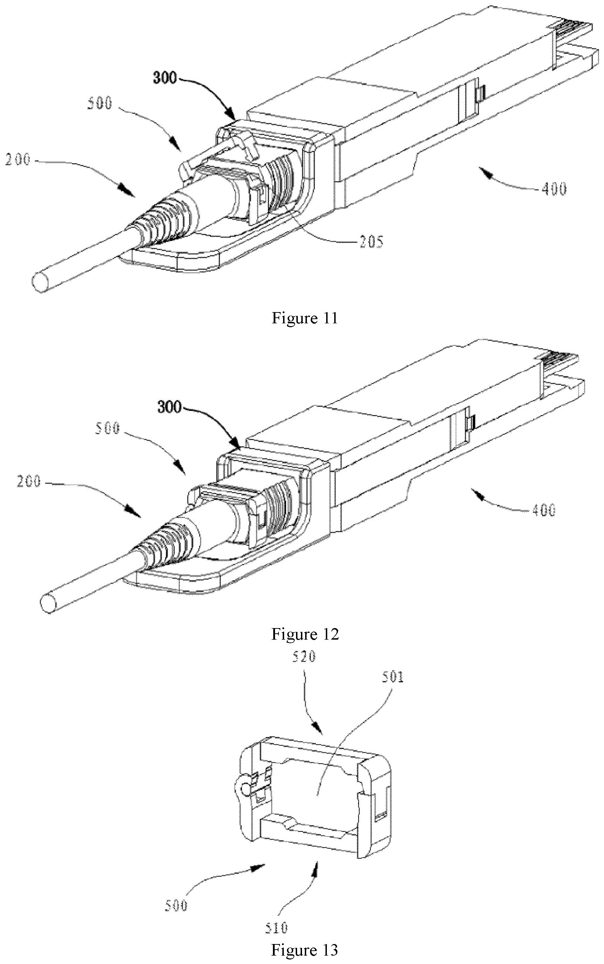

As shown in Figures 11 and 12, the active optical cable assembly provided in the embodiment of the present disclosure mainly comprises a second optical cable clamp ring 500, as well as an optical fiber connector 200, an optical port adapter 300, and an optical transceiver 400 which are sequentially connected, wherein the optical port adapter 300 is fixedly installed at an end of the optical transceiver 400, and the optical fiber connector 200 is in a pluggable connection with the optical port adapter 300.

The specific structures of the optical fiber connector 200 and the optical port adapter 300 can be referred to the relevant introductions in Figure 4, Figure 5, and Embodiment 1, and their contents will not be repeated here. When the front end of the plug connector 206 is inserted into the optical port adapter 300, the second optical cable clamp ring 500 is sleeved on the recession groove of the optical fiber connector 200, which can prevent the movable kit 203 from sliding backwards. When it is necessary to pull out the optical fiber connector 200 from the optical port adapter 300, firstly, the second optical cable clamp ring 500 is removed from the recession groove, and then the movable kit 203 is caused to slide backward to the recession groove to pull out the optical fiber connector 200 from the optical port adapter 300.

The following will continue to provide a specific introduction to the structure of the second optical cable clamp ring 500 in conjunction with the accompanying drawings.

As shown in Figure 13, the second optical cable clamp ring 500 is a closed ring structure, comprising a third half ring 510 and a fourth half ring 520. The third half ring 510 and the fourth half ring 520 are assembled to form a second ring core 501 for accommodating the intermediate connection sleeve 205 of the optical fiber connector 200. A first end of the third half ring 510 (i.e. the left end in the figure) is connected to a first end of the fourth half ring 520 via a pivot, and a second end of the third half ring 510 (i.e. the right end in the figure) is connected to a second end of the fourth half ring 520 via a buckle.

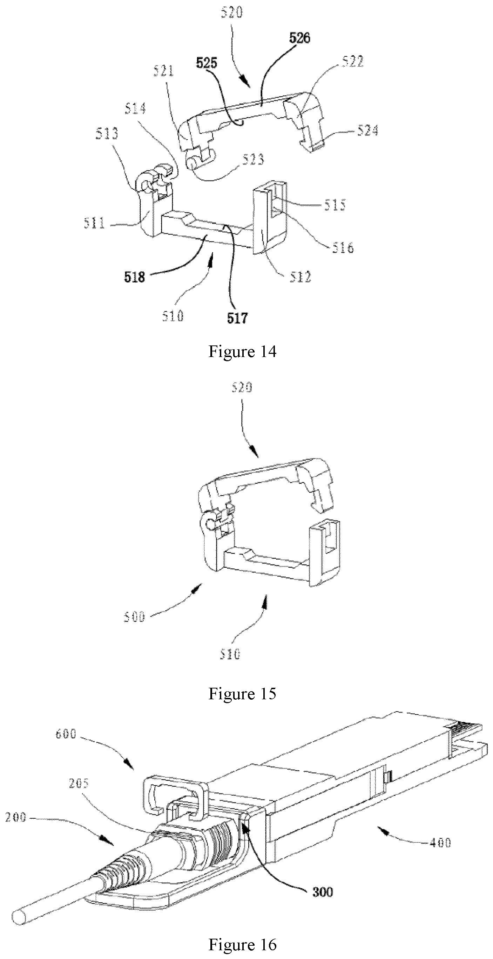

Continuing referring to Figures 14 and 15, the third half ring 510 comprises a third crossbeam 518 located in the middle, as well as a fifth side arm 511 and a sixth side arm 512 which are located at each of two ends of the third crossbeam 518, respectively. The fourth half ring 520 comprises a fourth crossbeam 526 and a seventh side arm 521 and an eighth side arm 522 which are located at each of two ends of the fourth crossbeam 526, respectively. An inner side of the third crossbeam 518 is provided with a third recession groove 517 for making way for the first guide pin 201 or the second guide pin 202 on the optical fiber connector 200. An inner side of the fourth crossbeam 526 is provided with a fourth recession groove 525 for making way for the first guiding pin 201 or the second guiding pin 202 on the optical fiber connector 200.

The fifth side arm 511 is provided with a hinge hole 513, whose inner side is provided with an opening 514, and the seventh side arm 521 is provided with a hinge shaft 523, wherein the hinge shaft 523 is squeezed into the hinge hole 513 from the opening 514, so that the hinge shaft 523 is concentric with the hinge hole 513, and the hinge shaft 523 can rotate freely in the hinge hole 513. An outer side of the sixth side arm 512 is provided with a third protrusion 515 and a third recess 516, and the eighth side arm 522 is provided with a third clamp hook 524.

When the second optical cable clamp ring 500 needs to be assembled, the hinge shaft 523 on the fourth half ring 520 rotates in the hinge hole 513 in the third half ring 510, and the third clamp hook 524 on the fourth half ring 520 squeezes into the third recess 516 in the third half ring 510 and snaps with the third protrusion 515 on the third half ring 510. In this way, the third half ring 510 and the fourth half ring 520 can be assembled in a pivot manner and buckle connection manner and sleeved on the optical fiber connector 200.

In the above mentioned active optical cable assembly provided in the embodiment of this disclosure, when the optical fiber connector is inserted into the optical port adapter, the movable kit can be used to achieve fastening, and then the second optical cable clamp ring can be sleeved on the recession groove of the optical fiber connector to prevent the movable kit from sliding backwards, whereby the movable kit can always play its fastening role to prevent the plug connector from detaching from the optical port adapter. By means of the above structure, a pluggable connection can be achieved between the optical fiber connector and the optical transceiver, thereby achieving the function of not connecting the optical cable during the assembly of the optical transceiver, and solving the problem of cable scrapping caused by inconvenient assembly of the optical transceiver.

### Embodiment 3

In order to achieve a pluggable connection between an optical fiber connector and an optical transceiver, and to solve the problem of optical cable scrapping caused by inconvenient assembly of optical transceivers, an embodiment of the present disclosure also provides another active optical cable assembly, which differs from Embodiments 1 and 2 in that the structures of the optical cable clamp ring used are different.

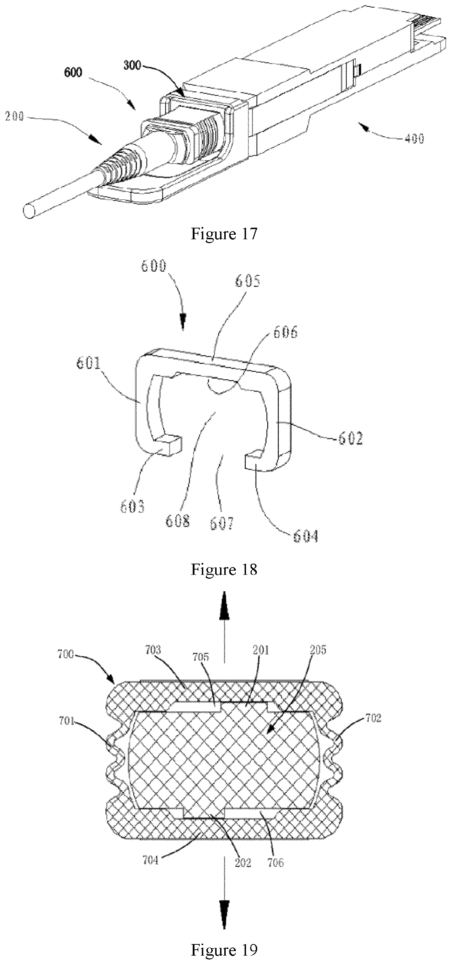

As shown in Figures 16 and 17, the active optical cable assembly provided in the embodiment of the present disclosure mainly comprises a third optical cable clamp ring 600, as well as an optical fiber connector 200, an optical port adapter 300, and an optical transceiver 400 that are sequentially connected, wherein the optical port adapter 300 is fixedly installed at an end of the optical transceiver 400, and the optical fiber connector 200 is in a pluggable connection with the optical port adapter 300.

The specific structures of the optical fiber connector 200 and the optical port adapter 300 can be referred to the relevant introductions in Figure 4, Figure 5, and Embodiment 1, and their contents will not be repeated here. When the front end of the plug connector 206 is inserted into the optical port adapter 300, the third optical cable clamp ring 600 is sleeved on the recession groove of the optical fiber connector 200, which can prevent the movable kit 203 from sliding backwards. When it is necessary to pull out the optical fiber connector 200 from the optical port adapter 300, firstly, the third optical cable clamp ring 600 is removed from the recession groove, and then the movable kit 203 is forced to slide backwards to pull out the optical fiber connector 200 from the optical port adapter 300.

The following will continue to provide a specific introduction to the structure of the third optical cable clamp ring 600 in conjunction with the accompanying drawings:
As shown in Figure 18, the third optical cable clamp ring 600 is an open ring structure, comprising a fifth crossbeam 605 located in the middle and a ninth side arm 601 and a tenth side arm 602 which are located at each of two ends of the fifth crossbeam 605, respectively. An inner side of the fifth crossbeam 605 is provided with a fifth recession groove 606 for making way for the first guiding pin 201 or the second guiding pin 202 on the optical fiber connector 200. An end of the ninth side arm 601 is provided with a first clamp hook 603, and an end of the tenth side arm 602 is provided with a second clamp hook 604, wherein an installation port 607 is provided between the first clamp hook 603 and the second clamp hook 604. The middle of the optical cable clamp ring forms a third ring core 608, for accommodating the intermediate connection sleeve 205 of the optical fiber connector 200.

When the third optical cable clamp ring 600 needs to be sleeved on the optical fiber connector 200, the third optical cable clamp ring 600 can be disconnected from the first clamp hook 603 and the second clamp hook 604, making the installation port 607 larger and thus the third optical cable clamp ring 600 is able to be installed at the recession groove of the optical fiber connector 200.

In the above mentioned active optical cable assembly provided in the embodiment of this disclosure, when the optical fiber connector is inserted into the optical port adapter, the movable kit can be used to achieve fastening, and then the third optical cable clamp ring can be sleeved on the recession groove of the optical fiber connector to prevent the movable kit from sliding backwards, whereby the movable kit can always play its fastening role to prevent the plug connector from detaching from the optical port adapter. By means of the above structure, a pluggable connection can be achieved between the optical fiber connector and the optical transceiver, thereby achieving the function of not connecting the optical cable during the assembly of the optical transceiver, and solving the problem of cable scrapping caused by inconvenient assembly of the optical transceiver.

### Example 4

In order to achieve a pluggable connection between an optical fiber connector and an optical transceiver, and to solve the problem of optical cable scrapping caused by inconvenient assembly of optical transceivers, an embodiment of the present disclosure also provides another active optical cable assembly, which differs from Embodiments 1 to 3 in that the structures of the optical cable clamp ring used are different.

The active optical cable assembly provided in the embodiment of this disclosure mainly comprises a fourth optical cable clamp ring 700, as well as an optical fiber connector 200, an optical port adapter 300, and an optical transceiver 400 that are sequentially connected, wherein the optical port adapter 300 is fixedly installed at an end of the optical transceiver 400, and the optical fiber connector 200 is in a pluggable connection with the optical port adapter 300.

The specific structures of the optical fiber connector 200 and the optical port adapter 300 can be referred to the relevant introductions in Figures 4, 5, and Embodiment 1, and their contents will not be repeated here. When the front end of the plug connector 206 is inserted into the optical port adapter 300, the fourth optical cable clamp ring 700 is sleeved on the recession groove of the optical fiber connector 200, which can prevent the movable kit 203 from sliding backwards. When it is necessary to pull out the optical fiber connector 200 from the optical port adapter 300, firstly, the fourth optical cable clamp ring 700 is removed from the recession groove, and then the movable kit 203 is forced to slide backwards to pull out the optical fiber connector 200 from the optical port adapter 300.

The following will continue to provide a specific introduction to the structure of the fourth optical cable clamp ring 700 in conjunction with the accompanying drawings.

As shown in Figure 19, the fourth optical cable clamp ring 700 is a closed ring structure, comprising a sixth crossbeam 703 located in the middle, a seventh crossbeam 704 located on the opposite side of the sixth crossbeam 703, and a first elastic arm 701 and a second elastic arm 702 which are located at each of two ends of the sixth crossbeam 703, respectively. The sixth crossbeam 703, the first elastic arm 701, the seventh crossbeam 704, and the second elastic arm 702 form a fourth ring core. An inner side of the sixth crossbeam 703 is provided with a sixth recession groove 705 for making way for the first guiding pin 201 or the second guiding pin 202 on the optical fiber connector 200. An inner side of the seventh crossbeam 704 is provided with a seventh groove 706 for making way for the first guide pin 201 or the second guide pin 202 on the optical fiber connector 200. The first elastic arm 701 and the second elastic arm 702 are similar in shape to springs and can be compressed or stretched.

When an external force as shown in Figure 19 is applied to the sixth crossbeam 703 and the seventh crossbeam 704, the first elastic arm 701 and the second elastic arm 702 can be stretched, causing the fourth ring core to become larger, and the fourth optical cable clamp ring 700 can be inserted into the recession groove of the optical fiber connector 200 from the direction of the tail sleeve 204, and then the external force can be removed to restore the initial size of the fourth ring core and stuck on the recession groove.

In the above mentioned active optical cable assembly provided in the embodiment of this disclosure, when the optical fiber connector is inserted into the optical port adapter, the movable kit can be used to achieve fastening, and then the fourth optical cable clamp ring can be sleeved on the recession groove of the optical fiber connector to prevent the movable kit from sliding backwards, whereby the movable kit can always play its fastening role to prevent the plug connector from detaching from the optical port adapter. With the above structure, a pluggable connection can be achieved between the optical fiber connector and the optical transceiver, thereby achieving the function of not connecting the optical cable during the assembly of the optical transceiver, and solving the problem of cable scrapping caused by inconvenient assembly of the optical transceiver.

### Embodiment 5

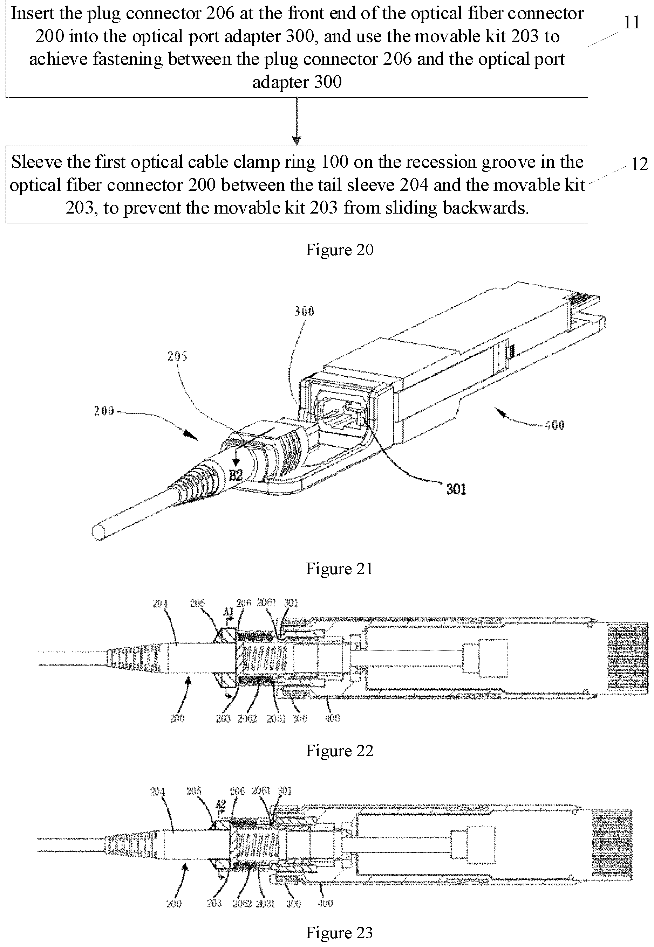

On the basis of the above embodiments 1 to 4, an embodiment of the present disclosure further provides a method for assembling an active optical cable assembly, to assemble the active optical cable assembly described in embodiments 1 to 4. As shown in Figure 20, the assembly method mainly comprises the following steps:
Step 11, inserting the plug connector 206 at the front end of the optical fiber connector 200 into the optical port adapter 300, and using the movable kit 203 to achieve fastening between the plug connector 206 and the optical port adapter 300.

Referring to Figures 1 to 4, when the front end of the plug connector 206 is inserted into the optical port adapter 300, the elastic claw 301 on the inner side of the optical port adapter 300 is coupled to the clamp slot 2061 on the outer side of the plug connector 206; at this time, the spring 2062 is in a natural state, and the side wall of the front end of the movable kit 203 is squeezed against the outer side of the elastic claw 301, which can prevent the elastic claw 301 from stretching out and detaching from the slot 2061, thereby achieving the fastening between the optical fiber connector 200 and the optical port adapter 300. The internal components of the optical transceiver 400 have been preassembled.

Step 12, sleeving the first optical cable clamp ring 100 on the recession groove in the optical fiber connector 200 between the tail sleeve 204 and the movable kit 203, to prevent the movable kit 203 from sliding backwards.

Continuing with reference to Figures 1 to 4, when the plug connector 206 is inserted into the optical port adapter 300 to achieve coupling, the optical cable clamp ring is installed on the recession groove in the optical fiber connector 200, which is located between the movable kit 203 and the tail sleeve 204.

After assembly, the active optical cable assembly is shown in Figures 1, 12, and 17. At this time, when a backward external force is applied to the movable kit 203 of the optical fiber connector 200, the optical cable clamp ring is located in the recession groove behind the movable kit 203, which can effectively prevent the movable kit 203 from sliding backwards, as shown in Figure 4, so that the front end of the movable kit 203 is always surrounding the outer side of the elastic claw 301 of the plug connector 206, thereby effectively preventing the elastic claw 301 from stretching out and detaching from the buckle slot 2061. For this step, in the embodiments of this disclosure,
1) When the first optical cable clamp ring 100 in Embodiment 1 is used, the installation steps of the first optical cable clamp ring 100 into the recession groove are as follows:
   Firstly, sleeving the first half ring 110 on the recession groove of the optical fiber connector 200 from above or below. The handle of the optical transceiver 400 is made of soft colloidal material, and when installing the first optical cable clamp ring 100, it can be bent out of place. Therefore, the first half ring 110 can be sleeved from above and below the optical fiber connector 200.

Then, the second half ring 120 is sleeved on the recession groove of the optical fiber connector 200 from the opposite side of the first half ring 110, so that the first clamp hook 123 and the second clamp hook 124 of the second half ring 120 are squeezed into the first recess 113 and the second recess 114 of the first half ring 110, respectively, and are buckled with the first protrusion 115 and the second protrusion 116 of the first half ring 110. In this way, the first optical cable clamp ring 100 can be sleeved on the recession groove.

Furthermore, if the active optical cable assembly needs to be repaired and disassembled, the specific disassembly steps are as follows:
Firstly, removing the first optical cable clamp ring 100 from the recession groove of the optical fiber connector 200. The specific operations are as follows: using a tweezer and other tools to pry open the first clamp hook 123 and the second clamp hook 124 of the second half ring 120, so that the first clamp hook 123 and the second clamp hook 124 respectively detach from the first protrusion 115 and the second protrusion 116 of the first half ring 110; then sequentially removing the second half ring 120 and the first half ring 110 from the optical fiber connector 200.

Then, sliding the movable kit 203 backwards to the recession groove, and pulling out the optical fiber connector 200 from the optical port adapter 300 to open the shell for repairing the optical transceiver 400. The specific operation is as follows: applying a force F opposite to the direction towards the optical transceiver 400 to the movable kit 203, so that the movable kit 203 slides to the recession groove of the intermediate connection sleeve 205, as shown in Figure 5, whereby the side wall of the front end of the movable kit 203 gradually detaches from the elastic claw 301. At this time, pulling the optical fiber connector 200 backwards can cause the elastic claw 301 to be externally stretch out with respect to the optical fiber connector 200, further unplug the optical fiber connector 200 from the optical port adapter 300. After the optical fiber connector 200 is unplugged, the optical transceiver 400 can be easily opened and repaired without carrying an optical cable.
2) When the second optical cable clamp ring 500 in Embodiment 2 is used, the installation steps of the second optical cable clamp ring 500 into the recession groove are as follows:
   Firstly, matching the hinge hole 513 of the third half ring 510 with the hinge shaft 523 of the fourth half ring 520 to form a coaxial state, and to enable the third half ring 510 and the fourth half ring 520 to form the second optical cable clamp ring 500.

Then, sleeving the second optical cable clamp ring 500 on the recession groove of the optical fiber connector 200, which can be operated by forcing apart the soft colloidal handle of the optical transceiver 400 during the installation process.

Finally, squeezing the third clamp hook 524 of the fourth half ring 520 into the third recess 516 of the third half ring 510 and snapping it with the third protrusion 515 of the third half ring 510. In this way, the second optical cable clamp ring 500 can be sleeved on the recession groove.

Furthermore, if the active optical cable assembly needs to be repaired and disassembled, the specific disassembly steps are as follows:
Firstly, removing the second optical cable clamp ring 500 from the recession groove of the optical fiber connector 200. The specific operations are as follows: using a tweezer and other tools to pry open the third clamp hook 524 of the fourth half ring 520, detaching it from the third protrusion 515 of the third half ring 510, and then removing the second optical cable clamp ring 500 from the optical fiber connector 200.

Then, sliding the movable kit 203 backwards to the recession groove, and pulling out the optical fiber connector 200 from the optical port adapter 300 to open the shell of the optical transceiver 400 for repairing. The specific operation process can refer to the previous description and their contents will not be repeated here.
3) When the third optical cable clamp ring 600 in Embodiment 3 is used, the installation steps of the third optical cable clamp ring 600 into the recession groove are as follows:
Firstly, disconnecting the third optical cable clamp ring 600 from the first clamp hook 603 and the second clamp hook 604, making the installation port 607 larger.

Then, sleeving the disconnected third optical cable clamp ring 600 from the installation port 607 on the recession groove of the optical fiber connector 200. After the installation, the installation port 607 becomes the initial size.

Furthermore, if the active optical cable assembly needs to be repaired and disassembled, the specific disassembly steps are as follows:
Firstly, removing the third optical cable clamp ring 600 from the recession groove of the optical fiber connector 200. The specific operation is as follows: using a tool such as a finger or tweezer to simultaneously open the first clamp hook 603 and the second clamp hook 604, and increasing the installation port 607 until the third optical cable clamp ring 600 can be removed from the optical fiber connector 200.

Then, sliding the movable kit 203 backwards to the recession groove, and pulling out the optical fiber connector 200 from the optical port adapter 300 to open the shell of the optical transceiver 400 for repairing. The specific operation process can refer to the previous description and will not be elaborated here.
**4)** When the fourth optical cable clamp ring 700 in Embodiment 4 is used, the installation steps of the fourth optical cable clamp ring 700 into the recession groove are as follows:
Firstly, stretching outward the first elastic arm 701 and the second elastic arm 702 and causing the fourth ring core to become larger by applying an external force as shown in Figure 19 to the sixth crossbeam 703 and the seventh crossbeam 704.

Then, sleeving the fourth optical cable clamp ring 700 on the recession groove of the optical fiber connector 200 from the direction towards the tail sleeve 204, and then removing the external force to restore the initial size of the fourth ring core, so that the fourth optical cable clamp ring 700 is stuck on the recession groove of the optical fiber connector 200.

Furthermore, if the active optical cable assembly needs to be repaired and disassembled, the specific disassembly steps are as follows:
Firstly, stretching outward the first elastic arm 701 and the second elastic arm 702 by applying an external force as shown in Figure 19 to the sixth crossbeam 703 and the seventh crossbeam 704, to enable the fourth ring core to become larger until the fourth optical cable clamp ring 700 can be removed from the optical fiber connector 200 from the direction towards the tail sleeve 204.

Then, sliding the movable kit 203 backwards to the recession groove, and pulling out the optical fiber connector 200 from the optical port adapter 300 to open the shell of the optical transceiver 400 for repairing. The specific operation process can refer to the previous description and their contents will not be repeated here.

In the above method provided in the embodiment of this disclosure, the optical fiber connector can conveniently insert and remove the optical port adapter installed on the optical transceiver, which can achieve a pluggable connection between the optical fiber connector and the optical transceiver, so that the assembly and disassembly of the optical transceiver do not require carrying optical cables, and the operation is convenient and efficient, which can solve the problem of optical cable scrapping caused by inconvenient assembly of the optical transceiver.

### Embodiment 6

In order to achieve a pluggable connection between the optical fiber connector and the optical transceiver, and thereby solve the problem of optical cable scrapping caused by inconvenient assembly of optical transceivers, an embodiment of the present disclosure provides an active optical cable assembly, and its difference from the aforementioned embodiment 4 is that the optical cable clamp ring is no longer set, but the backward sliding of the active kit is blocked by a rotatable intermediate connection sleeve.

As shown in Figure 21, the active optical cable assembly provided in the embodiment of the present disclosure comprises an optical fiber connector 200, an optical port adapter 300, and an optical transceiver 400 which are arranged in sequence, wherein the optical port adapter 300 is fixedly installed at one end of the optical transceiver 400, and the optical fiber connector 200 is in a pluggable connection with the optical port adapter 300.

Referring to Figure 3, the optical fiber connector 200 comprises a movable kit 203, and a tail sleeve 204, an intermediate connection sleeve 205, and a plug connector 206, wherein the tail sleeve 204, the intermediate connection sleeve 205, and the plug connector 206 are sequentially connected from rear to front. A front end of the plug connector 206 is used for coupling with the optical port adapter 300, and a rear end is connected to the intermediate connection sleeve 205; the movable kit 203 is sleeved on an outer side of the plug connector 206 for preventing the plug connector from detaching from the optical port adapter 300 after the plug connector 206 is inserted into the optical port adapter 300, so that the fastening between the optical fiber connector 200 and the optical port adapter 300 is achieved, and the movable kit 203 can slide forward and backward along the plug connector 206.

Referring to Figure 21, an outer side of the intermediate connection sleeve 205 is provided with a recession groove, which is connected to the rear end of the plug connector 206. The intermediate connection sleeve 205 can rotate around the tail sleeve 204, and when the intermediate connection sleeve 205 rotates at a preset angle around the axis, it can prevent the movable kit 203 from sliding backwards. When the intermediate connection sleeve 205 is in its initial position and cannot prevent the movable kit 203 from sliding backwards, the fastening effect fails when the movable kit 203 can slide backwards to the recession groove, and the plug connector 206 can be pulled out from the optical port adapter 300.

The following is a specific introduction to the insertion and extraction structure of the active optical cable assembly, combined with the accompanying drawings:
Referring to Figures 22 and 23, an inner side of the optical port adapter 300 is provided with an elastic claw 301 that extends outward, and an outer side of the front end of the plug connector 206 is provided with a corresponding buckle slot 2061. The outer side of the plug connector 206 is further provided with a spring groove, which is located at the rear end of the card groove 2061, and the spring groove is provided with a spring 2062 therein; an inner side of the movable kit 203 is provided with a protrusion 2031, and a front end of the spring 2062 is in contact with a rear end of the protrusion 2031. The intermediate connection sleeve 205 is further provided with a first guide pin 201 and a second guide pin 202 which are located at the rear end of the recession groove, as shown in Figure 3, for limiting the movable kit 203 when it slides backwards to the recession groove.

Referring to Figure 22, when the front end of the plug connector 206 is inserted into the optical port adapter 300, the elastic claw 301 on the inner side of the optical port adapter 300 is just exactly coupled to the slot 2061 on the outer side of the plug connector 206. At this time, the spring 2062 is in a natural state, and the side wall of the front end of the movable sleeve 203 is squeezed on the outer side of the elastic claw 301, which can prevent the elastic claw 301 from stretching out and detaching from the slot 2061, thereby achieving the fastening between the optical fiber connector 200 and the optical port adapter 300. At this point, rotating the intermediate connection sleeve 205 at a preset angle around the tail sleeve 204 from the initial position can effectively block the sliding backward of the movable kit 203, so that the front end of the movable kit 203 always surrounds the outer side of the elastic claw 301 of the plug connector 206, thereby effectively preventing the elastic claw 301 from stretching out and separating from the slot 2061.

Referring to Figure 23, when the optical fiber connector 200 needs to be pulled out of the optical port adapter 300, the intermediate connection sleeve 205 needs to be rotated back to its initial position, and then the movable kit 203 needs to be slid backwards. The spring 2062 is compressed under the action of the protrusion 2031, and the movable kit 203 slides to the recession groove of the intermediate connection sleeve 205, gradually detaching the side wall of the front end of the movable kit 203 from the elastic claw 301, and at this time, the plug connector 206 of the optical fiber connector 200 can be pulled out of the optical port adapter 300.

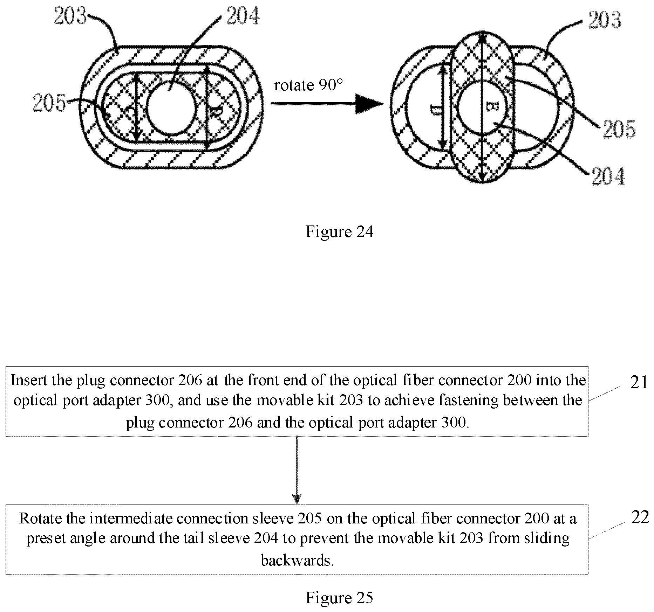

Specifically, the fitting relationship between the intermediate connection sleeve 205 and the movable kit 203 can be referred to Figure 24. On the intermediate connection sleeve 205, the longitudinal dimension C at the recession groove is slightly smaller than the longitudinal dimension D inside the movable kit 203, so that when the movable kit 203 slides backwards, it can slide to the recession groove; the longitudinal dimension E at the recession groove is greater than the longitudinal dimension D inside the movable kit 203, so that the intermediate connection sleeve 205 can prevent the movable kit 203 from sliding backwards after rotating at a preset angle. Here, the value range of the preset angle is (0°, 180°), preferably 90°; in Figure 25, the intermediate connection sleeve 205 in the left figure is in the initial position, and the intermediate connection sleeve 205 rotates by 90° as shown in the right figure; at this time, the intermediate connection sleeve 205 can prevent the movable kit 203 from sliding backwards.

In the above-mentioned active optical cable assembly provided in the embodiment of this disclosure, when the optical fiber connector is inserted into the optical port adapter, the movable kit can be used to fasten the plug connector and the optical port adapter, and then the intermediate connection sleeve can be rotated to prevent the movable kit from sliding backwards. The movable kit can always play its fastening role to prevent the plug connector from detaching from the optical port adapter. Through the above structure, a pluggable connection can be achieved between the optical fiber connector and the optical transceiver, thereby achieving the function of not connecting the optical cable during the assembly of the optical transceiver, and solving the problem of cable scrapping caused by inconvenient assembly of the optical transceiver.

### Embodiment 7

On the basis of the above embodiment 6, an embodiment of the present disclosure further provides a method for assembling an active optical cable assembly described in embodiment 6. As shown in Figure 25, the assembly method mainly comprises the following steps:
Step 21, inserting the plug connector 206 at the front end of the optical fiber connector 200 into the optical port adapter 300, and using the movable kit 203 to achieve fastening between the plug connector 206 and the optical port adapter 300.

The specific operations are the same as the operations of step 11 in Example 5, and their contents will not be repeated here.

Step 22, rotating the intermediate connection sleeve 205 on the optical fiber connector 200 at a preset angle around the tail sleeve 204 to prevent the movable kit 203 from sliding backwards.

Referring to Figures 22 to 24, when the plug connector 206 is inserted into the optical port adapter 300 to achieve coupling, the intermediate connection sleeve 205 is rotated at a preset angle around the tail sleeve 204 from the initial position, such as 90°, as shown in Figure 24.

After assembly, when a backward external force is applied to the movable kit 203 of the optical fiber connector 200, the intermediate connection sleeve 205 can effectively prevent the movable kit 203 from sliding backward, so that the front end of the movable kit 203 is always surrounding the elastic claw 301 of the plug connector 206, effectively preventing the elastic claw 301 from stretching out and separating from the slot 2061.

Furthermore, based on the above embodiment, if the active optical cable assembly needs to be repaired and disassembled, the specific disassembly steps thereof are as follows:
Firstly, rotating the intermediate connection sleeve 205 on the optical fiber connector 200 around the tail sleeve 204 at a preset angle and returning it to the initial position. For example, when the rotation angle is 90°, it is necessary to rotate the intermediate connection sleeve 205 from the right position in Figure 24 back to the left position in Figure 24.

Then, sliding the movable kit 203 backwards to the recession groove, and pulling out the optical fiber connector 200 from the optical port adapter 300 to open the shell of the optical transceiver 400 for repair. Its specific operation is as follows: applying a force opposite to the direction towards the optical transceiver 400 to the movable kit 203, to cause the movable kit 203 to slide to the recession groove of the intermediate connection sleeve 205, and to cause the side wall of the front end of the movable kit 203 to be gradually detached from the elastic claw 301, while pulling the optical fiber connector 200 backwards, which can cause the elastic claw 301 to stretch out to the optical fiber connector 200, further, unplugging the optical fiber connector 200 from the optical port adapter 300.

In the above methods provided in the embodiments of this disclosure, the optical fiber connector can be conveniently inserted into or removed from the optical port adapter installed on the optical transceiver; that is a pluggable connection between the optical fiber connector and the optical transceiver can be achieved, so that the assembly and disassembly of the optical transceiver do not require optical cables, and the operation is convenient and efficient, which can solve the problem of optical cable scrapping caused by inconvenient assembly of the optical transceiver.

It is easy for those skilled in the art to understand that the above embodiments are only preferred embodiments of the present disclosure and are not intended to limit the present disclosure in any way. Any modifications, equivalent replacements, and improvements made within the spirit and principles of the present disclosure should be included in the scope of protection of the present disclosure.

## Claims

1. An active optical cable assembly, comprising an optical fiber connector (200), an optical port adapter (300), and an optical transceiver (400) which are arranged in sequence;
wherein the optical port adapter (300) is fixedly installed at one end of the optical transceiver (400), and the optical fiber connector (200) is in a pluggable connection with the optical port adapter (300);
the optical fiber connector (200) comprises a movable kit (203), a tail sleeve (204), an intermediate connection sleeve (205), and a plug connector (206), wherein the tail sleeve (204), the intermediate connection sleeve (205) and the plug connector (206) being arranged sequentially, and the movable kit (203) is sleeved on an outer side of the plug connector (206) to prevent the plug connector from detaching from the optical port adapter (300) after the plug connector (206) is inserted into the optical port adapter (300);
a blocking member is arranged between the tail sleeve (204) and the movable kit (203) to prevent the movable kit (203) from sliding backwards; when the blocking member is removed and the movable kit (203) is caused to slide backwards to the intermediate connection sleeve (205), the plug connector (206) is enabled to be pulled out from the optical port adapter (300).

2. The active optical cable assembly of claim 1, wherein an inner side of the optical port adapter (300) is provided with an elastic claw (301), and an outer side of a front end of the plug connector (206) is provided with a corresponding buckle slot (2061);
when the front end of the plug connector (206) is inserted into the optical port adapter (300), the elastic claw (301) is coupled to the buckle slot (2061), and a side wall of a front end of the movable kit (203) is squeezed against an outer side of the elastic claw (301) to prevent the elastic claw (301) from stretching out and detaching from the buckle slot (2061).

3. The active optical cable assembly of claim 1, wherein the blocking member specifically adopts an optical cable clamp ring, and an outer side of the intermediate connection sleeve (205) is provided with a recession groove;
when the optical cable clamp ring is sleeved on the recession groove, the movable kit (203) is prevented from sliding backwards; when the optical cable clamp ring is removed and the movable kit (203) is caused to slide back to the recession groove, the plug connector (206) is enabled to be pulled out of the optical port adapter (300).

4. The active optical cable assembly of claim 3, wherein the optical cable clamp ring is a closed ring structure, comprising a first half ring (110) and a second half ring (120), wherein the first half ring (110) and the second half ring (120) are assembled to form a first ring core (101) for accommodating the intermediate connection sleeve (205) of the optical fiber connector (200), and the first half ring (110) and the second half ring (120) are connected in a buckle manner;
wherein the first half ring (110) comprises a first crossbeam (118) and a first side arm (111) and a second side arm (112) which are located at each of two ends of the first crossbeam (118), respectively; and the second half ring (120) comprises a second crossbeam (126) and a third side arm (121) and a fourth side arm (122) which are located at each of two ends of the second crossbeam (126), respectively.

5. The active optical cable assembly of claim 4, wherein an outer side of the first side arm (111) is provided with a first protrusion (115) and a first recess (113), and an outer side of the second side arm (112) is provided with a second protrusion (116) and a second recess (114);
the third side arm (121) is provided with a first clamp hook (123) thereon, and the fourth side arm (122) is provided with a second clamp hook (124) thereon;
when assembling, the first clamp hook (123) and the second clamp hook (124) on the second half ring (120) are squeezed into the first recess (113) and the second recess (114) in the first half ring (110), respectively, and are buckled with the first protrusion (115) and the second protrusion (116) on the first half ring (110), respectively.

6. The active optical cable assembly of claim 3, wherein the optical cable clamp ring is a closed ring structure, comprising a third half ring (510) and a fourth half ring (520), the third half ring (510) and the fourth half ring (520) being assembled to form a second ring core (501) for accommodating the intermediate connection sleeve (205) of the optical fiber connector (200), and the third half ring (510) and the fourth half ring (520) being connected in a pivot manner and a buckle manner;
wherein the third half ring (510) comprises a third crossbeam (518) and a fifth side arm (511) and a sixth side arm (512) which are located at each of two ends of the third crossbeam (518), respectively; and the fourth half ring (520) comprises a fourth crossbeam (526) and a seventh side arm (521) and an eighth side arm (522) which are located at each of two ends of the fourth crossbeam (526), respectively.

7. The active optical cable assembly of claim 6, wherein the fifth side arm (511) is provided with a hinge hole (513), and an inner side of the hinge hole (513) is provided with an opening (514); the seventh side arm (521) is provided with a hinge shaft (523); wherein the hinge shaft (523) is squeezed into the hinge hole (513) from the opening (514), so that the hinge shaft (523) is concentric with the hinge hole (513), and the hinge shaft (523) is rotatable freely in the hinge hole (513);
an outer side of the sixth side arm (512) is provided with a third protrusion (515) and a third recess (516), and the eighth side arm (522) is provided with a third clamp hook (524);
when assembling, the hinge shaft (523) on the fourth half ring (520) rotates within the hinge hole (513) on the third half ring (510), and the third clamp hook (524) on the fourth half ring (520) squeezes into the third recess (516) in the third half ring (510) and snaps with the third protrusion (515) on the third half ring (510).

8. The active optical cable assembly of claim 3, wherein the optical cable clamp ring is an open ring structure, comprising a fifth crossbeam (605) and a ninth side arm (601) and a tenth side arm (602) which are located at each of two ends of the fifth crossbeam (605), respectively;
an end of the ninth side arm (601) is provided with a first clamp hook (603), and an end of the tenth side arm (602) is provided with a second clamp hook (604), an installation port (607) being provided between the first clamp hook (603) and the second clamp hook (604);
wherein a middle of the optical cable clamp ring forms a third ring core (608), for accommodating the intermediate connection sleeve (205) of the optical fiber connector (200).

9. The active optical cable assembly of claim 1, wherein the intermediate connection sleeve (205) is rotatable around the tail sleeve (204), and when the intermediate connection sleeve (205) rotates at a predetermined angle, a blocking member that is preventable the active kit (203) from sliding backwards is formed; when the intermediate connection sleeve (205) is in its initial position, the movable kit (203) is slidable backwards to pull out the plug connector (206) from the optical port adapter (300).

10. An assembly method for assembling an active optical cable assembly according to any one of claims 1-9, comprising:
inserting the plug connector (206) at the front end of the optical fiber connector (200) into the optical port adapter (300), and using the movable kit (203) to achieve fastening between the plug connector (206) and the optical port adapter (300);
installing a blocking member between the tail sleeve (204) and the movable kit (203) on the optical fiber connector (200) to prevent the movable kit (203) from sliding backwards.
